Europäisches Patentamt

European Patent Office

Office européen des brevets

(19)

(11) EP 0 849 099 A2

(12) EUROPÄISCHE PATENTANMELDUNG

(43) Veröffentlichungstag:
24.06.1998 Patentblatt 1998/26

(51) Int. Cl.6: B60C 9/18

(21) Anmeldenummer: 97122013.2

(22) Anmeldetag: 13.12.1997

(84) Benannte Vertragsstaaten:
AT BE CH DE DK ES FI FR GB GR IE IT LI LU MC NL PT SE

(30) Priorität: 19.12.1996 DE 19652893

(71) Anmelder:
Continental Aktiengesellschaft
30165 Hannover (DE)

(72) Erfinder:
• Stevens, Hendrik, Dr.
  30419 Hannover (DE)
• Neumann, Axel, Dr.
  31559 Hohnhorst (DE)
• Knauf, Werner
  31515 Wunstorf (DE)

(54) **Fahrzeugluftreifen**

(57) Fahrzeugluftreifen mit einem zwischen einer zumindest einlagigen Radialkarkasse und einem Laufstreifen angeordneten, mehrlagigen Gürtel, wobei die Gürtellagen aus in eine Gummierungsmischung eingebetteten Festigkeitsträger, insbesondere aus Stahlcord, bestehen. Im Bereich der Gürtelkanten ist zwischen zwei Gürtellagen (5, 6; 5', 6'; 9', 10') je ein Gürtelkantenprofil (8, 8', 8'') angeordnet, welches aus einer Gummimischung besteht, deren Shorehärte (ShA) 60 bis 95 % der für diese Gürtellagen (5, 6; 5', 6'; 9', 10') eingesetzte Gummierungsmischung und deren Rückprallelastizität (bei 70° C) ≥ 60 % beträgt.

FIG. 1

EP 0 849 099 A2

**Beschreibung**

Die vorliegende Erfindung betrifft einen Fahrzeugluftreifen mit einem zwischen einer zumindest einlagigen Radialkarkasse und einem Laufstreifen angeordneten, mehrlagigen Gürtel, wobei die Gürtellagen aus in eine Gummierungsmischung eingebetteten Festigkeitsträgern, insbesondere aus Stahlcord, bestehen.

Es ist bekannt, daß die Gürtelkantenbereiche eines Reifens beim Gebrauch des Reifens besonders beansprucht werden, was mit einer die Reifenhaltbarkeit beeinträchtigenden Wärmeentwicklung im Bereich der Gürtelkanten einhergeht. Dies trifft sowohl für PKW- als auch für LKW-Radialreifen zu. Durch die Wärmeentwicklung im Bereich der Gürtelkanten wird darüber hinaus auch der Rollwiderstand der Reifen erhöht. An den Gürtelkanten konzentrieren sich besonders im Latschein- und -auslauf Schubwechselspannungen infolge der abrupten Steifigkeitsänderung über der Axialen. In Zusammenwirkung mit der Hysteresis des Gummis und dessen schlechtem Wärmeleitvermögen sind die Umgebungszonen der Gürtelkanten besonders heiß. Die Wärmequellstärke im Bereich der Gürtelkanten hängt also unter anderem von der Größe der Differenz zwischen der Steifigkeit von Stahl und der von Gummi ab. Bislang wurde versucht, durch einen möglichst hohen Elastizitätsmodul der Gürtelgummierungsmischung den Verformungsweg zu verringern und damit Hystereseverluste zu vermindern und die Gürtelhaltbarkeit zu verbessern. Bedingt durch den schon erwähnten Unterschied der Elastizitätsmoduli der Festigkeitsträger in den Gürtellagen und der Gummierungsmischung kann jedoch der Verformungsweg nur geringfügig über die Auslegung der Gummierungsmischung beeinflußt werden.

Es wurde ferner schon verschiedentlich versucht, durch gesonderte, innerhalb des Gurtelverbandes angeordnete Gummilagen den Rollwiderstand des Reifens zu senken. So ist beispielsweise aus der DE-A 31 05 209 ein Fahrzeugluftreifen bekannt, der einen aus vier Lagen bestehenden Gürtel aufweist, wobei zwischen zwei inneren Gürtellagen eine Gummilage angeordnet ist, die aus einem Mittelstreifen und zwei gesonderten seitlichen Streifen besteht. Der Mittelstreifen ist aus einer sehr weichen Gummimischung gefertigt mit einer Shorehärte (ShA) von etwa 40 bis 50. Hingegen besitzen die seitlichen Streifen eine höhere Shorehärte (ShA) von etwa 65 bis 70. Miffelstreifen und Seitenstreifen sind dabei so angeordnet, daß sie einander in einem gewissen Bereich überlappen. Aus der EP-A 0 280 674 ist ein Fahrzeugreifen mit einer mehrlagigen Gürtelkonstruktion bekannt, bei der eine innerhalb des Gürtelverbandes angeordnete Gürtellage aus zwei Randteilen besteht, wobei die Lücke zwischen diesen Randteilen durch eine gesonderte Gummilage ausgefüllt ist, die aus einer Gummimischung besteht, deren Harte um mindestens 10 Shore A- Punkte geringer ist als die Härte der für die Gürtellagen verwendeten Aufpreßmischung. In beiden Druckschriften geht es insbesondere auch darum, durch die gesonderten Gummilagen die Verletzungsanfälligkeit des Laufstreifens durch Steine oder dergleichen zu reduzieren. Diesen bekannten Lösungen ist ferner gemeinsam, daß sie keinen bzw. kaum einen Einfluß auf die Wärmeentwicklung an den Gürtelkantenbereichen nehmen.

Die Erfindung hat sich nun die Aufgabe gestellt, durch geeignete Maßnahmen die Wärmeentwicklung im Bereich der Gürtelkanten von PKW- und LKW-Radialreifen zu verringern, somit die Haltbarkeit und damit die Lebensdauer dieser Reifen zu verbessern.

Gelöst wird die gestellte Aufgabe erfindungsgemäß dadurch, daß im Bereich der Gürtelkanten zwischen zwei Gürtellagen je ein Gürtelkantenprofil angeordnet ist, welches aus einer Gummimischung besteht, deren Shorehärte (ShA) 60 bis 95 % der für diese Gürtellagen eingesetzten Gummierungsmischung und deren Rückprallelastizität (bei 70° C) ≥ 60 % beträgt.

Nach der gegenständlichen Erfindung wurde daher erkannt, daß ein weiches, hochelastisches Gürtelkantenprofil die Wärmeentwicklung im Bereich der Gürtelkanten deutlich verringert. Dies ist insbesondere darauf zurückzuführen, daß die in der Gummierungsmischung auftretende Zwangsverformung nun größtenteils in das Gürtelkantenprofil verlagert ist.

Gemäß einer bevorzugten Ausführungsform der Erfindung besitzt die Gummimischung für das Gürtelkantenprofil eine Shorehärte (ShA), die zwischen 70 und 85 % der Shorehärte (ShA) der Gummierungsmischung der Gürtellagen ist. Die Rückprallelastizität der Gummimischung des Gürtelkantenprofiles beträgt insbesondere 70 bis 90 %. Diese Auslegung der Gummimischung für das Gürtelkantenprofil hat sich für die Verminderung der Temperaturentwicklung an den Gürtelkanten als besonders effektiv herausgestellt.

Der Verlustfaktor tan δ (bei 60° C) der Gummimischung des Gürtelkantenprofiles liegt in einem Bereich zwischen 0,15 und 0,01. Auch diese Auslegung ist für die erwünschte niedrige Dämpfung der Gummimischung von Vorteil.

Besonders günstig für die Wirkung des Gürtelkantenprofiles ist es, wenn die Shorehärte (ShA) des Gürtelkantenprofiles zwischen 55 und 65, vorzugsweise etwa 60, beträgt.

Um den Effekt der Verringerung der Temperaturentwicklung an den Gürtelkanten sicherzustellen und gleichzeitig den Gürtel in seinen sonstigen Eigenschaften, insbesondere was seine Festigkeit betrifft, nicht zu beeinträchtigen sollte das Gürtelkantenprofil entsprechend angeordnet und ausgelegt werden. Da eine der beiden Gürtellagen, zwischen welchen die Gürtelkantenprofile angeordnet werden, im allgemeinen schmäler ausgeführt ist als die zweite Gürtellage, ist es, um Verformungsenergie in den Gürtelkantenbereichen gut aufnehmen zu können, von Vorteil, wenn die Gürtelkantenprofile zumindest jeweils bis zur Kante der breiteren Gürtellage reichen. Für die Gesamtfestigkeit des Gürtels ist es ferner günstig, wenn die Gürtelkantenprofile, im Querschnitt betrachtet, keilförmig gestaltet sind und in Richtung Gürtelmitte spitz auslaufen.

Was die Dimensionierung des Gürtelkantenprofiles bezüglich seiner Breite und seiner Dicke betrifft, ist diese auf den Einsatz der Gürtelkantenprofile, sei es in einem PKW-Reifen oder in einem LKW-Reifen, abzustimmen. Darüber hinaus gibt es auch besonders effektive Anordnungsmöglichkeiten der Gürtelkantenprofile bei PKW-Reifen auf der einen Seite und LKW-Reifen auf der anderen Seite.

Bei einem PKW-Reifen sollten die Gürtelkantenprofile zwischen den beiden radial äußersten Gürtellagen angeordnet werden. Dabei können diese Gürtellagen gleichzeitig die einzigen Gürtellagen in einem PKW-Reifen sein. Die Breite der Gürtelkantenprofile bei ihrem Einsatz in PKW-Reifen sollte in jenem Bereich, wo diese zwischen den beiden Gürtellagen verlaufen, zwischen 5 und 25mm, insbesondere zwischen 10 und 20mm, betragen. Die größte Dicke der Gürtelkantenprofile wird dabei zwischen 0,4 und 1,6mm, insbesondere zwischen 0,8 und 1,2mm gewählt.

Bei einem LKW-Reifen ist es von Vorteil, wenn die Gürtelkantenprofile zwischen der ersten und der zweiten Gürtellage angeordnet werden. Dabei sollten die Gürtelkantenprofile in jenem Bereich, wo diese zwischen den beiden Gürtellagen verlaufen, zwischen 10 und 45mm, insbesondere zwischen 20 und 30mm, gewählt werden. Die größte Dicke der Gürtelkantenprofile sollte zwischen 1,5 bis 4,5mm, insbesondere zwischen 2 und 3,5mm, betragen.

Bei LKW-Reifen hat es sich ferner zur Verbesserung des Effektes der Temperaturverminderung im Bereich der Gürtelkanten als vorteilhaft herausgestellt, wenn zweite Gürtelkantenprofile vorgesehen werden, die zwischen der radial äußersten und der dieser benachbarten Gürtellage angeordnet sind. Diese zweiten Gürtelkantenprofile werden etwas schmäler ausgeführt, ihre größte Dicke sollte zwischen 1 und 3mm, insbesondere zwischen 1,5 bis 2,5mm, betragen. Auch die Breite der zweiten Gürtelkantenprofile wird etwas geringer gewählt und beträgt in jenem Bereich, wo diese zwischen den beiden Gürtellagen verlaufen, 60 bis 80% der Breite der weiteren Gürtelkantenprofile

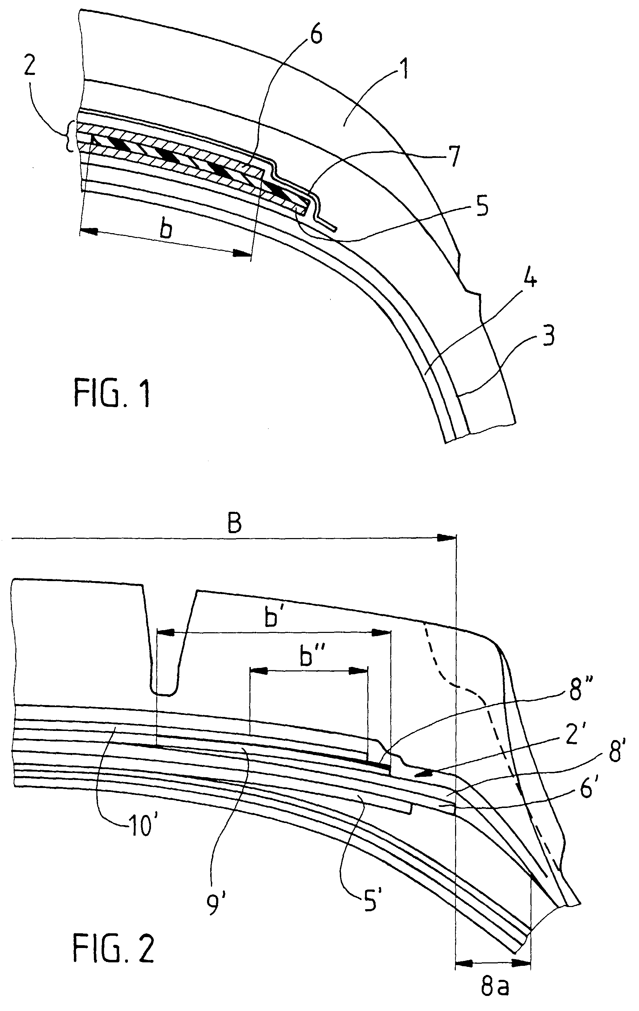

Weitere Merkmale, Vorteile und Einzelheiten der Erfindung werden nun anhand der Zeichnung, die zwei Ausführungsbeispiele darstellt, näher beschrieben. Dabei ist in den beiden Zeichnungsfiguren jeweils ein Querschnitt durch einen Teil des Laufstreifen- und Gürtelbereiches eines Fahrzeugluftreifens, in Fig. 1 eines PKW-Reifens und in Fig. 2 eines LKW-Reifens, dargestellt.

Wie aus Fig. 1 ersichtlich ist, besitzt ein PKW-Reifen im dargestellten Bereich üblicherweise einen Laufstreifen 1, einen Gürtel 2, eine radial innerhalb des Gürtels verlaufende Radialkarkasse 3 und eine Innenplatte 4. Zwischen der Radialkarkasse 3, die in bekannter Weise zumindest einlagig ausgeführt ist, und dem mit einem Profil versehenen Laufstreifen 1 ist der in diesem Ausführungsbeispiel zwei Gürtellagen 5,6 aufweisende Gürtel 2 angeordnet. Die beiden Gürtellagen 5, 6 bestehen in bekannter Weise jeweils aus in eine Gummierungsmischung eingebetteten Stahlcorden, die in jeder Lage jeweils parallel zueinander und unter einem spitzen Winkel, der üblicherweise zwischen 18° und 25° gewählt wird, zur Umfangsrichtung des Reifens verlaufen, wobei die Anordnung so getroffen ist, daß sich die Stahlcorde in den beiden benachbarten Lagen kreuzen.

Der Gürtel 2 kann, wie es aus dem Stand der Technik bekannt ist und auch in Fig. 1 dargestellt ist, durch eine Bandage 7, die üblicherweise aus in eine Gummimischung eingebetteten, in Umfangsrichtung und parallel zueinander verlaufenden Nylonfäden bzw. -corden besteht, abgedeckt sein.

Die radial weiter außen angeordnete Gürtellage 6 besitzt im allgemeinen eine Breite, die etwas geringer ist als die Breite der ersten Gürtellage 5. An den schulterseitigen Randbereichen des Gürtels 2 ist zwischen den beiden Gürtellagen 5, 6 ein Gürtelkantenprofil 8 angeordnet. Das Gürtelkantenprofil 8 verläuft, ausgehend von der Kante der Gürtellage 5 mit der geringeren Breite, zwischen den beiden Gürtellagen 5, 6, und besitzt in diesem Bereich eine Mindestbreite b von 5mm. Im allgemeinen wird die Breite des Gürtelkantenprofiles 8 so gewählt, daß jener Bereich, der sich zwischen den beiden Gürtellagen 5, 6 befindet, eine Breite b von bis zu 25mm besitzt. Es hat sich als günstig herausgestellt, wenn die Breite b des Gürtelkantenprofiles 8 so gewählt wird, daß es in jenem Bereich, wo es zwischen den beiden Gürtellagen 5, 6 verläuft, eine Breite von 10 bis 20mm besitzt.

Eine größere Breite hat auf die Wirkung des Gürtelkantenprofiles kaum Einfluß, könnte aber die Gesamtfestigkeit des Gürtels beeinträchtigen. Von Vorteil ist es jedenfalls, wenn das Gürtelkantenprofil 8 so ausgeführt wird, daß es die breitere Gürtellage 5, zumindest bis zu deren Rand reichend, abdeckt.

Die Dicke des Gürtelkantenprofiles 8 sollte, um seine erwünschten Eigenschaften sicherzustellen, mindestens 0,4mm betragen. Eine Dicke von 0,8 bis 1,2mm hat sich als besonders günstig herausgestellt. Bei einer Dicke, die etwa 1,6mm überschreitet, tritt kaum mehr eine Eigenschaftsverbesserung ein und es könnte ebenfalls die Gesamtfestigkeit des Gürtels beeinträchtigt werden.

Dabei kann das Gürtelkantenprofil 8 so ausgelegt werden, daß es im Querschnitt eine konstante bzw. im wesentlichen konstante Dicke besitzt oder keilförmig gestaltet ist. Die Keilform wird so gewählt, daß das Profil 8 seine geringste Dicke an seinem axial inneren Endbereich besitzt.

Von besonderer Bedeutung ist die Auslegung der Gummimischung für das Gürtelkantenprofil 8. Es ist ja bekannt, daß die Gürtelkantenbereiche besonders kritische Bereiche sind, da durch die Walkarbeit des Reifens während des Abrollens die Gürtelkantenbereiche mehr beansprucht werden, was mit einer höheren Temperaturentwicklung im Bereich der Gürtelkanten einhergeht und somit die Haltbarkeit des Reifens in diesen Bereichen verringert. Diese höhere Temperaturentwicklung im Bereich der Gürtelkanten hat auch einen gewissen Beitrag am Rollwiderstand des Reifens.

Die üblichen Gummierungsmischungen für Gürtellagen von Fahrzeugreifen besitzen zwangsweise einen geringeren Elastizitätsmodul als die Stahlcordfestigkeitsträger in der Lage. Die Gummierung der Gürtellagen wird daher im Bereich der Gürtelkanten einer Zwangsverformung unterworfen, wobei bisher nach dem Stand der Technik versucht wurde, durch einen möglichst hohen Elastizitätsmodul der Gummierungsmischung der Gürtellagen den Verformungsweg zu verringern und damit Hystereseverluste zu vermindern bzw. die Gürtelhaltbarkeit zu verbessern. Bedingt durch den schon erwähnten Unterschied der Elastizitätsmoduli von Stahlcord und Gummierungsmischung kann aber der Verformungsweg nur geringfügig über die Gummierungsmischung beeinflußt werden.

Im Rahmen der gegenständlichen Erfindung wurde nun erkannt, daß ein weiches, hochelastisches Gürtelkantenprofil die Temperaturentwicklung an den Gürtelkanten deutlich absenkt.

Das Gürtelkantenprofil 8 wird aus einer Gummimischung gefertigt, die einen niedrigen Elastizitätsmodul besitzt, nämlich einen Elastizitätsmodul, der geringer ist als jener der Gummierungsmischung der Gürtellagen. Die Shorehärte (ShA) des Gürtelkantenprofiles 8 wird zwischen 60 und 95 %, insbesondere zwischen 70 und 85 %, der Shorehärte (ShA) der Gürtelgummierungsmischung gewählt. Darüber hinaus wird die Gummimischung für das Gürtelkantenprofil 8 so ausgelegt, daß sie eine niedrigere Dämpfung aufweist als jene der Gürtelgummierungsmischung. Die Gummimischung für das Gürtelkantenprofil 8 besitzt daher eine Rückprallelastizität (bei 70° C) ≥ 60 %, insbesondere zwischen 70 und 90 %. Der Verlustfaktor tan δ (bei 60° C) der Gummimischung des Gürtelkantenprofiles 8 sollte möglichst niedrig sein und zwischen 0,15 und 0,01 betragen. Dadurch findet nur eine relativ geringe Erwärmung im Bereich des Gürtelkanten statt, obwohl die Verformung größer ist.

Gürtelkantenprofile, deren Gummimischung bezüglich der Shorehärte, der Rückprallelastizität und des Verlustfaktors tan δ gleichermaßen wie oben beschrieben ausgelegt ist, können mit einer auffallend guten Wirkung auch bei LKW-Reifen eingesetzt werden. Gerade bei LKW-Reifen kann es aufgrund der großen Beanspruchungen der Gürtelkantenbereiche aufgrund starker Verformungen zu Lösungen zwischen den Bauteilen kommen. Fig. 2 zeigt nun eine für einen LKW-Reifen bevorzugte Möglichkeit der Anordnung und Ausbildung eines solchen Gürtelkantenprofiles.

Fig. 2 zeigt den üblichen Aufbau eines LKW-Radialreifens im Laufstreifen- und Schulterbereich. Dargestellt sind demnach ein profilierter Laufstreifen 1', ein vier Gürtellagen 5', 6', 9', 10' umfassender Gürtel 2', wobei die Gürtellagen 5', 6', 9', 10' in bekannter Weise aus in eine Gummierungsmischung eingebetteten Festigkeitsträgern, insbesonders aus Stahlcord, bestehen. Dabei bilden die Festigkeitsträger in den Lagen 5', 6' bzw. 9', 10' mit der Reifenumfangsrichtung Winkel von etwa 18° bis 25°, und zwar derart, daß zwei übereinander liegende Lagenpaare in symmetrischer Rautenanordnung vorliegen.

An den schulterseitigen Randbereichen des Gürtels 2' ist nun zwischen der zweiten und der dritten Gürtellage 6', 9' (die erste Gürtellage 5' ist die der Radialkarkasse 3' unmittelbar benachbarte Lage) je ein erfindungsgemäß ausgelegtes Gürtelkantenprofil 8' angeordnet. Jedes Gürtelkantenprofil 8' wird derart dimensioniert, daß es in jenem Bereich, wo es zwischen den beiden Gürtellagen 6', 9' verläuft, eine Breite b' besitzt, die zwischen 10 und 45mm, insbesondere zwischen 20 und 30mm, beträgt. Die Dicke des Gürtelkantenprofiles 8' im Bereich der Gürtelkante der schmäleren Gürtellage 9' wird zwischen 1,5 und 4,5mm, vorzugsweise zwischen 2 und 3,5mm, gewählt. Das Gürtelkantenprofil 8' wird ferner im Querschnitt bevorzugt keilförmig gestaltet, sodaß seine geringste Dicke bzw. der Auslauf des Keiles am axial inneren Endbereich vorliegt, bzw. erfolgt. Darüber hinaus kann das Gürtelkantenprofil 8' so gestaltet werden, daß es zumindest bis zur Kante der breiteren Gürtellage 6', bevorzugt auch darüber hinaus, verläuft. Im letzteren Fall besitzt das Gürtelkantenprofil 8' die Form eines länglichen Dreiecks. Der Überstand 8'a beträgt dabei etwa bis zu 10% der Breite B der breitesten Gürtellage.

Zweite, erfindungsgemäß ausgelegte Gürtelkantenprofile 8" können zwischen der dritten und der vierten Gürtellage 9', 10' angeordnet werden. Die Gürtelkantenprofile 8" werden dabei insbesondere mit einer geringeren Dicke ausgeführt als die Gürtelkantenprofile 8', ihre Dicke, gemessen an der Kante der Gürtellage 10' mit der geringeren Breite, beträgt zwischen 1,5 und 2,5mm. Dabei werden die Gürtelkantenprofile 8" so ausgelegt, daß sie im Bereich der Kante der breiteren Gürtellage 9' enden. Die Breite b" des Gürtelkantenprofiles 8", die in jenem Bereich vorliegt, wo es zwischen den beiden Gürtellagen 9',10' verläuft, wird insbesondere zwischen 50 und 80% der Breite b' gewählt. Auch für das Gürtelkantenprofil 8" kann ein keilförmiger Querschnitt bzw. ein keilförmiger Auslauf gewählt werden.

Grundsätzlich gilt auch bei LKW - Reifen, daß bei der Dimensionierung der Gürtelkantenprofile 8', 8" darauf Bedacht zu nehmen ist, daß keine Beeinträchtigung der Gesamtfestigkeit des Gürtels erfolgt.

Die Anordnung von Gürtelkantenprofilen ist selbstverständlich auch bei LKW-Reifen mit solchen Gürteln möglich, bei denen, abweichend von der ansonsten üblichen Rautenanordnung, die Festigkeitsträger Dreiecke miteinander bilden, indem beispielsweise die Festigkeitsträger von zwei Gürtellagen Winkel von etwa 18° bis 25° mit der Umfangsrichtung einschließen, während eine dritte Lage einen Winkel von etwa 65° zur Reifenumfangsrichtung einnimmt. Bei einem solchen, sogenannten Dreiecksgürtel, werden erfindungsgemäß ausgelegte Gürtelkantenprofile bevorzugt zwischen jenen Gürtellagen angeordnet, deren Festigkeitsträger den kleineren Winkel zur Umfangsrichtung einschließen.

In der Tabelle 1 sind einige Mischungsbeispiele enthalten, wobei die Beispiele 1, 2 und 3 Mischungsbeispiele für erfindungsgemäße Gürtelkantenprofile sind und die Beispiele 4 und 5 Mischungszusammensetzungen für typische Gürtelgummierungsmischungen angeben. Mit Vulkanisaten aus den einzelnen Mischungszusammensetzungen wurden ferner Messungen der für die gegenständliche Erfindung wesentlichen Materialeigenschaften durchgeführt und in der Tabelle ergänzt.

Diese Werte wurden nach folgenden Meßverfahren ermittelt:

Shorehärte (ShA): gemäß DIN 53504, bei Raumtemperatur

Rückprallelastizität bei 70° C in Prozent: gemäß DIN 53512

Verlustfaktor tan $\delta$ : gemäß DIN 53513

Dynamischer Verlustmodul E" (N/mm$^2$): gemäß DIN 53513

In sämtlichen Mischungsbeispielen sind die Anteile der einzelnen Mischungskomponenten auf 100 Gewichtsteile Kautschuk in der Mischung bezogen. Als Polymer wurde in sämtlichen Mischungsbeispielen Naturkautschuk eingesetzt. Anstelle von Naturkautschuk kann bzw. können ein oder mehrere Kautschuk(e) aus der Gruppe der Dienkautschuke, wie Butadienkautschuk, gegebenenfalls auch im Verschnitt miteinander, eingesetzt werden. Als weitere Mischungsbestandteile enthielten die Mischungen gemäß den Beispielen Aktivruß, wobei die Gummierungsmischungen (Beispiele 4 und 5) jeweils einen größeren Rußanteil besaßen, als die erfindungsgemäß ausgeführten Mischungen für die Gürtelkantenprofil 8, 8', 8". Darüber hinaus sind in sämtlichen Mischungen die üblichen Zusatzstoffe, wie Zinkweiß, Stearinsäure, Alterungsschutzmittel, Schwefel und Beschleuniger enthalten.

Der Rußanteil der Mischungen kann teilweise (siehe Beispiele 3 und 5) oder zur Gänze durch gefällte Kieselsäure ersetzt werden. Als zusätzliche Verstärker können Duromerharze, wie beispielsweise phenolische Verstärkerharze, beigemengt werden.

Wie aus der Tabelle ersichtlich ist, besitzen die Vulkanisate, die aus den erfindungsgemäßen Mischungen gefertigt sind, eine Shorehärte (ShA) von 60, die Vulkanisate gemäß den Mischungen aus dem Stand der Technik eine Shorehärte (ShA) von 75. Die Rückprallelastizität der Vulkanisate aus den erfindungsgemäßen Mischungen ist wesentlich größer als jene der Vulkanisate aus den bekannten Gummierungsmischungen. Der Verlustfaktor tan $\delta$ und der Verlustmodul E" sind bei den Vulkanisaten der erfindungsgemäßen Mischungen, wie oben erwähnt, geringer als bei den Vulkanisaten aus den bekannten Gummierungsmischungen.

Es wurden ferner Versuche angestellt, um die Temperaturentwicklung an den Gürtelkanten zu ermitteln. Die Messung der Gürtelkantentemperatur erfolgte durch Einstich an der Gürtelkante des jeweiligen Reifens, der unter 100% Last bei 70 km/h lief. Für die Messung wurde der Reifen angehalten.

Dabei wurde bei PKW-Reifen nach dem Stand der Technik mit einem zweilagig ausgeführten Gürtel, deren Gummierungsmischung gemäß dem in der Tabelle angegebenen Beispiel 4 gefertigt war, an den Gürtelkanten eine Temperatur von 93,6° C festgestellt. PKW-Reifen, die mit erfindungsgemäß ausgeführten Gürtelkantenprofilen im Bereich zwischen der ersten und zweiten Gürtellage versehen waren, zeigten eine Temperatur an der Gürtelkante von 86,3° C beim Einsatz von Gürtelkantenprofilen aus der Mischung gemäß Beispiel 1 und von 78,1° C beim Einsatz von Gürtelkantenprofilen aus der Mischung gemäß Mischungsbeispiel 2.

Bei LKW-Reifen wurden die üblichen, mit der Gürtelgummierungsmischung übereinstimmenden und zwischen der zweiten und dritten Gürtellage angeordneten Keilprofile, die gemäß Mischungsbeispiel 5 gefertigt waren, durch Gürtelkantenprofile, die aus der Mischung gemäß Beispiel 3 gefertigt waren, ersetzt. Die an den Gürtelkanten des LKW-Reifens nach dem Stand der Technik ermittelte Temperatur betrug 94° C, beim LKW-Reifen mit erfindungsgemäßen Gürtelkantenprofilen wurde eine Temperatur von 89° C festgestellt. Darüber hinaus wurde durch Vergleich der LKW-Reifen nach dem Stand der Technik mit jenen gemäß der vorliegenden Erfindung nach einer Laufstrecke von 45.000 km bei 100% Last und einer Geschwindigkeit von 80 km/h ermittelt, inwieweit Gürtelkantenlösungen nach dem Abziehen des Laufstreifens auftreten. Das Ausmaß der festgestellten Gürtelkantentrennungen betrug bei LKW-Reifen nach dem Stand der Technik 4 mm, bei LKW-Reifen mit erfindungsgemäßen Gürtelkantenprofilen 1 mm.

TABELLE 1

| Mischungszusammensetzung | Beispiel 1 (Erfindung) | Beispiel 2 (Erfindung) | Beispiel 3 (Erfindung) | Beispiel 4 | Beispiel 5 |
|---|---|---|---|---|---|
| Naturkautschuk | 100 | 100 | 100 | 100 | 100 |
| Ruß HAF-LS | 40 | - | 30 | 60 | 55 |
| Ruß HAF | - | 35 | - | - | - |
| Kieselsäure | - | - | 10 | - | 10 |
| Zinkweiss | 5 | 5 | 8 | 5 | 8 |
| Stearinsäure | 2 | 2 | 1 | 2 | 1 |
| Alterungsschutz | 2 | 2 | 1 | 2 | 1 |
| Schwefel | 5,5 | 2 | 6 | 5,5 | 6 |
| Beschleuniger CBS | - | 0,9 | - | - | - |
| Beschleuniger DCBS | 1,3 | - | 1,2 | 1,3 | 1,2 |
| Shorehärte ShA | 60 | 60 | 60 | 75 | 75 |
| Rückprallelastizität bei 70° C, % | 73 | 70 | 73 | 53 | 50 |
| Verlustfaktor $\tan\delta$ bei 60° C | 0,044 | 0,03 | 0,044 | 0,15 | 0,15 |
| Verlustmodul E" $(N/mm^2)$ | 0,42 | 0,24 | 0,24 | 2,25 | 2,3 |
| Reifenergebnisse: | | | | | |
| Temperatur Gürtelkante in °C | 86,3 | 78,1 | 89 | 93,6 | 94 |
| Gürtelkantentrennungen in mm | - | - | 1 | - | 4 |

**Patentansprüche**

1. Fahrzeugluftreifen mit einem zwischen einer zumindest einlagigen Radialkarkasse und einem Laufstreifen angeordneten, mehrlagigen Gürtel, wobei die Gürtellagen aus in eine Gummierungsmischung eingebetteten Festigkeitsträgern, insbesondere aus Stahlcord, bestehen, dadurch gekennzeichnet, daß im Bereich der Gürtelkanten zwischen zwei Gürtellagen (5, 6; 5', 6'; 9', 10') je ein Gürtelkantenprofil (8, 8', 8") angeordnet ist, welches aus einer Gummimischung besteht, deren Shorehärte (ShA) 60 bis 95 % der für diese Gürtellagen (5, 6, 5', 6', 9', 10') eingesetzten Gummierungsmischung und deren Rückprallelastizität (bei 70°) ≥ 60 % beträgt.

2. Fahrzeugluftreifen nach Anspruch 1, dadurch gekennzeichnet, daß die Shorehärte (ShA) der Gummimischung des Gürtelkantenprofiles (8, 8', 8") 70 bis 85 % der Shorehärte (ShA) der Gummierungsmischung der Gürtellagen (5, 6, 5', 6', 9', 10') beträgt.

3. Fahrzeugluftreifen nach Anspruch 1 oder 2, dadurch gekennzeichnet, daß die Gummimischung des Gürtelkantenprofiles (8, 8', 8") eine Rückprallelastizität von 70 bis 90 % besitzt.

4. Fahrzeugluftreifen nach einem der Ansprüche 1 bis 3, dadurch gekennzeichnet, daß der Verlustfaktor tan δ (bei 60° C) der Gummimischung des Gürtelkantenprofiles (8, 8', 8") 0,15 bis 0,01 beträgt.

5. Fahrzeugluftreifen nach einem der Ansprüche 1 bis 4, dadurch gekennzeichnet, daß die Shorehärte (ShA) der Gummimischung des Gürtelkantenprofiles (8, 8', 8") zwischen 55 und 65, vorzugsweise etwa 60, beträgt.

6. Fahrzeugluftreifen nach einem der Ansprüche 1 bis 5, dadurch gekennzeichnet, daß das Gürtelkantenprofil (8, 8', 8") am Randbereich des Gürtels, zumindest bis zur Kante der breiteren Gürtellage (6, 6', 9') reichend, angeordnet ist.

7. Fahrzeugluftreifen nach einem der Ansprüche 1 bis 6, dadurch gekennzeichnet, daß das Gürtelkantenprofil (8, 8', 8") im Querschnitt keilförmig gestaltet ist und in Richtung Gürtelmitte spitz ausläuft.

8. Fahrzeugluftreifen für Personenkraftwagen, nach einem der Ansprüche 1 bis 7, dadurch gekennzeichnet, daß die Gürtelkantenprofile (8) zwischen den beiden radial äußersten Gürtellagen (5, 6) angeordnet sind.

9. Fahrzeugluftreifen nach Anspruch 8, dadurch gekennzeichnet, daß die Breite (b) des Gürtelkantenprofiles (8) in jenem Bereich, wo es zwischen den beiden Gürtellagen angeordnet ist, zwischen 5 und 25mm, insbesondere zwischen 10 und 20mm, beträgt.

10. Fahrzeugluftreifen nach Anspruch 8 oder 9, dadurch gekennzeichnet, daß die größte Dicke des Gürtelkantenprofiles (8) zwischen 0,4 und 1,6mm, insbesondere zwischen 0,8 und 1,2mm, beträgt.

11. Fahrzeugluftreifen für einen Lastkraftwagen, Bus oder dgl., nach einem der Ansprüche 1 bis 7, dadurch gekennzeichnet, daß die Gürtelkantenprofile (8') zwischen der ersten und der zweiten Gürtellage (5', 6') angeordnet sind.

12. Fahrzeugluftreifen nach Anspruch 11, dadurch gekennzeichnet, daß die Breite (b') des Gürtelkantenprofiles (8') in jenem Bereich, wo es zwischen den beiden Gürtellagen(5',6') verläuft, zwischen 10 und 45mm, insbesondere zwischen 20 und 30mm, beträgt.

13. Fahrzeugluftreifen nach Anspruch 11 oder Anspruch 12, dadurch gekennzeichnet, daß die größte Dicke des Gürtelkantenprofiles (8') zwischen 1,5 und 4,5mm, insbesondere zwischen 2 und 3,5mm, beträgt.

14. Fahrzeugluftreifen nach einem der Ansprüche 11 bis 13, dadurch gekennzeichnet, daß zweite Gürtelkantenprofile (8") zwischen der radial äußersten und der diesen benachbarten Gürtellage (9', 10') angeordnet sind.

15. Fahrzeugluftreifen nach Anspruch 15, dadurch gekennzeichnet, daß die zweiten Gürtelkantenprofile (8") eine größte Dicke zwischen 1 und 3mm, insbesondere zwischen 1,5 und 2,5mm, besitzen.

16. Fahrzeugluftreifen nach Anspruch 14 oder Anspruch 15, dadurch gekennzeichnet, daß die Breite (b") der zweiten Gürtelkantenprofile (8") in jenem Bereich, wo sie zwischen den beiden Gürtellagen (9', 10') verlaufen, 60 bis 80% der Breite der weiteren Gürtelkantenprofile (8') beträgt.

FIG. 1

FIG. 2